# EUROPÄISCHE PATENTSCHRIFT

(11) **EP 0 432 379 B1**
(45) Veröffentlichungstag und Bekanntmachung des Hinweises auf die Patenterteilung: **08.09.1993**
(21) Anmeldenummer: 90117261.9
(22) Anmeldetag: 07.09.1990
(51) Int. Cl.: B01D 33/04, B01D 33/46

(54) **Bandfiltereinrichtung zur Reinigung von Bearbeitungsflüssigkeiten**
Bandfilter device for the purification of processing liquids
Dispositif filtrant à bande pour la purification des liquides d'usinage

(30) Priorität: 13.12.1989 DE 8914616 U
(43) Veröffentlichungstag der Anmeldung: 19.06.1991
(73) Patentinhaber: FILTERWERK MANN & HUMMEL GMBH, D-71631 Ludwigsburg (DE)
(72) Erfinder: Häfner, Jürgen, D-3340 Wolfenbüttel (DE); Bühl, Karl Heinz, D-5100 Aachen (DE)
(74) Vertreter: Voth, Gerhard, Dipl.-Ing.

(56) Entgegenhaltungen:
- EP-A- 0 228 210
- DE-A- 2 526 331
- US-A- 2 097 529
- US-A- 3 537 584
- US-A- 4 199 453

## Beschreibung

Die Neuerung betrifft eine Bandfiltereinrichtung zur Reinigung von Bearbeitungflüssigkeiten nach dem Oberbegriff des Hauptanspruchs. Bandfilteranlagen dienen zur Reinigung niedrigviskoser Bearbeitungsflüssigkeiten, insbesondere zur Reinigung von Emulsionen aus mineralölhaltigen Produkten mit Wasser, welche bei der Metallbearbeitung eingesetzt werden. Die verschmutzte Bearbeitungsflüssigkeit wird normalerweise über Rücklaufrohre von den Bearbeitungsmaschinen zu der Bandfiltereinrichtung geführt, dort gefiltert und wieder den Bearbeitungsmaschinen zugeführt.

Aus der EP-A-02 28 210 ist eine solche Bandfiltereinrichtung bekannt. Diese arbeitet nach dem Unterdruckprinzip das heißt, ein umlaufendes Filterband liegt auf einem Siebboden auf, unterhalb des Siebbodens befindet sich eine Unterdruckkammer, in welche die Flüssigkeit durch das Filterband hindurch eingesaugt wird. Durch eine diskontinuierliche Förderbewegung des Filterbandes wird der auf dem Filterband sich ablagernde Schmutz über einen Austragehals aus dem Flüssigkeitsbehälter herausgefördert und mit einer Filterbandreinigungseinrichtung, beispielsweise einem Schaber, Klopfer oder einer Abblaseinrichtung der Schmutz entfernt.

Das Filterband durchläuft anschließend eine Waschstation, die den Restschmutz auf dem Filterband abwäscht, wobei dieser Restschmutz in die Schmutzkammer zurückgeführt wird.

Die hier verwendeten Filterbänder sind relativ grobmaschig, so daß nur Schmutz bis zu einer bestimmten Korngröße aus der Bearbeitungsflüssigkeit herausgefiltert werden kann.

Sollen jedoch auch sehr feine Schmutzpartikel, beispielsweise Schleifstaub und ähnliches ausgefiltert werden, dann muß anstelle des umlaufenden Filterbandes ein Filtervlies eingesetzt werden, welches nur einen einmaligen Gebrauch zuläßt und nach Durchlauf durch die Bandfiltereinrichtung mit dem anfallenden Schmutz entsorgt wird.

Die Entsorgung dieses Filtervlieses ist jedoch aufwendig, außerdem muß von Zeit zu Zeit eine neue Filtervliesrolle eingelegt werden, sodaß eine zusätzliche Überwachung notwendig wird. Eine solche Bandfiltereinrichtung ist beispielsweise in dem DE-U- 87 15 433 beschrieben.

Eine Möglichkeit zur Verbesserung des Abscheidegrades bei Bandfiltereinrichtungen mit umlaufendem Filterband besteht darin, ein sehr feinmaschiges Filterband zu benutzen. Bei diesem feinmaschigen Filterband ist jedoch eine Abreinigung in der bekannten Weise nicht mehr möglich, da sich die feinen Poren dieses Bandes mit der bisher bekannten Wascheinrichtung nicht mehr freispülen lassen. Deshalb wurde auf den Einsatz feinmaschiger umlaufender Bänder verzichtet.

Der Neuerung liegt die Aufgabe zugrunde eine Bandfiltereinrichtung mit einer Wascheinrichtung zu schaffen, bei der ein umlaufendes Filterband mit einem hohen Abscheidegrad auch feinster Verunreinigungen möglich ist. Diese Aufgabe wird ausgehend von dem Oberbegriff des Hauptanspruchs durch dessen kennzeichnenden Merkmale gelöst.

Wesentlicher Vorteil dieser Lösung ist die zweistufige Reinigung des Filterbandes. So wird zunächst an der Oberfläche des Filterbandes anhaftender Schmutz durch eine Vorreinigungseinrichtung entfernt. Die Partikelgröße dieser Schmutzteilchen ist größer als die Maschenweite des Filterbandes. Die Vorreinigungseinrichtung hat deshalb die Aufgabe, diese Teilchen die auf dem Filterband aufliegen, zu entfernen. Hierzu ist nur ein geringer Druck der Reinigungsflüssigkeit erforderlich. Es ist andererseits auch nicht zweckmäßig, sofort mit einem hohen Flüssigkeitsdruck das Filterband zu reinigen. Mit Hochdruck auf das Filterband auftreffende Reinigungsflüssigkeit würde den an der Oberfläche anhaftende Schmutz in das Gewebe des Filterbandes einpressen und damit das Filterband zerstören. Es ist deshalb unerläßlich, daß vor der eigentlichen Hochdruckreinigung der an der Oberfläche anhaftende gröbere Schmutz von dem Filterband vollständig entfernt wird. Die Poren des Filterbandes können jedoch mit dieser Vorreinigungseinrichtung nicht oder nur sehr mangelhaft gereinigt werden.

In der zweiten Stufe der Reinigungseinrichtung sorgt eine Hochdruckreinigung dafür, daß nunmehr die Poren des Filterbandes gereinigt werden. Aufgrund der Entfernung des auf der Oberfläche des Filterbandes befindlichen Schmutzes durch die Vorreinigung besteht bei dieser Hochdruckreinigung nicht mehr die Gefahr, daß dieser Schmutz duch den Hochdruck zu einer Beschädigung des Filterbandes führen könnte. Der in den Poren des Filterbandes befindliche Schmutz kann deshalb ohne Gefahr für das Filterband entfernt werden. Der Hochdruckwert ist dabei so eingestellt, daß einerseits auch selbst kleinste in dem Gewebe des Filterbandes anhaftende Teilchen aus diesem Gewebe herausgelöst werden, andererseits aber das Gewebe selbst nicht zerstört wird.

Zur Vermeidung eines Austritts von Sprühnebel aus der Hochdruckreinigungseinrichtung ist die gesamte Wascheinrichtung mit einem Gehäuse umgeben. Außerdem befindet sich unterhalb des Filterbandes ein Sprühschutz, der den durch das Filterband hindurchtretende Hochdruckstrahl aufffängt und die mit dem abgereinigten Schmutz versehene Reinigungsflüssigkeit der Schmutzkammer zuführt. Die Wascheinrichtung ist damit nahezu vollständig gekapselt.

Eine vorteilhafte Ausgestaltung der Neuerung sieht vor, daß die Abreinigung des Filterbandes durch eine Anzahl von Düsen erfolgt, die sich über die Breite des Filterbandes erstrecken. Diese stationäre Anordnung von Düsen hat den Vorteil, daß eine hohe Betriebssicherheit gewährleistet wird.

Alternativ zu dieser Ausgestaltung der Reinigungseinrichtung kann die Neuerung mit beweglichen Düsen ausgestattet sein, hierbei sind eine oder mehrere Düsen derart angeordnet, daß sie die gesamte Breite des Filterbandes überstreichen und dieses mit einer oszillierenden Bewegung gleichmäßig abreinigen. Der Vorteil dieser Art der Abreinigung liegt darin, daß nur eine geringe Anzahl von Düsen und geringerer Energieaufwand benötigt wird.

Gemäß einer weiteren Ausgestaltung der Erfindung wird vorgeschlagen, die Reinigungsdüsen senkrecht zur Porenöffnung des beweglichen Filterbandes zu richten. Dabei wird durch das direkte Auftreffen des Reinigungsstrahls auf die Poren des Filterbandes eine sehr gute Reinigungswirkung erzielt.

In einer weiteren Ausgestaltung der Vorreinigungs- als auch der Hauptreinigungseinrichtung sind die Reinigungsdüsen höhenverstellbar angeordnet. Der Abstand der Reinigungsdüsen von dem Filterband kann damit variiert werden und unerschiedlichen Gegebenheiten bezüglich der Art des Filterbandes, der Art des am Filterband anhaftenden Schmutzes, usw. eingestellt werden.

Es hat sich weiterhin als vorteilhaft erwiesen, eine zum Spannen des Filterbandes erforderliche Spannstation der Wascheinrichtung nachzuschalten, damit wird ein Verschmutzen der Spannstation wirksam unterbunden.

Eine vorteilhafte Weiterbildung der Vorreinigungseinrichtung besteht darin, daß Reinigungsdüsen sowohl oberhalb als auch unterhalb des Filterbandes angeordnet sind.

Zum wirksamen Abschwemmen des am Filterband anhaftenden Schmutzes ist es zweckmäßig, die Reinigungsdüsen in einer Reihe anzuordnen, die die Form einer Pfeilspitze aufweist, wobei die Pfeilspitze entgegen der Laufrichtung des Filterbandes zeigt. Durch diese Anordnung wird der Schmutz auf dem Filterband nach außen weggeschwemmt.

Die Erfindung wird nachfolgend anhand eines Ausführungsbeispiels näher erläutert.

Es zeigt
Figur 1 eine Schnittdarstellung einer Bandfiltereinrichtung,
Figur 2 die Unterseite einer Wascheinrichtung.

Die Bandfiltereinrichtung besteht aus einer Gehäusewanne 10, welche eine obere, die verunreinigte Flüssigkeit aufnehmende Schmutzkammer 11 und eine unterhalb derselben angeordnete Reinkammer 12 umfaßt. Diese beiden Kammern sind voneinander durch einen, sich im wesentlichen horizontal erstreckenden Filterboden 13 getrennt. Ein umlaufendes Filterband 14 wird über den Filterboden 13 geführt, wobei eine im Bereich des Bodens mit dem Filterband mitlaufende Förderkette 15 für die Mitnahme des Bandes sorgt. Das Filterband wird von rechts nach links über den Filterboden geführt. Der Schmutz lagert sich auf dem Filterband 14 ab und wird über den Austragehals 16 aus der Gehäusewanne 10 herausgeführt.

Außerhalb des Austraghals 16 ist eine Späneaustragsvorrichtung in Form eines Schneckenförderers 17 angeordnet. In diesen gelangt der Schmutz, der durch Schwerkraft vom Band nach der Umlenkung abfällt, oder durch einen Schaber, einen Klopfer, oder eine Abblaseinrichtung vom Band getrennt wird. Dieser Schneckenförderer trägt den Schmutz seitlich aus. Während die Förderkette 15 über eine Umlenkrolle und die Leitbleche 19, 20 geführt ist, läuft das Filterband 14 nach dem Entfernen des Schmutzes über Umlenkrollen 21, 22, 23, 18 durch eine Wascheinrichtung 24, wird über eine Spanneinrichtung 25 gespannt und durchläuft anschließend eine Einlaufstation, welche eine Laufüberwachung des Filterbandes vornimmt.

Nach dieser Einlaufstation taucht das Filterband wieder in die Schmutzkammer 11 und wird dort von der Förderkette aufgenommen.

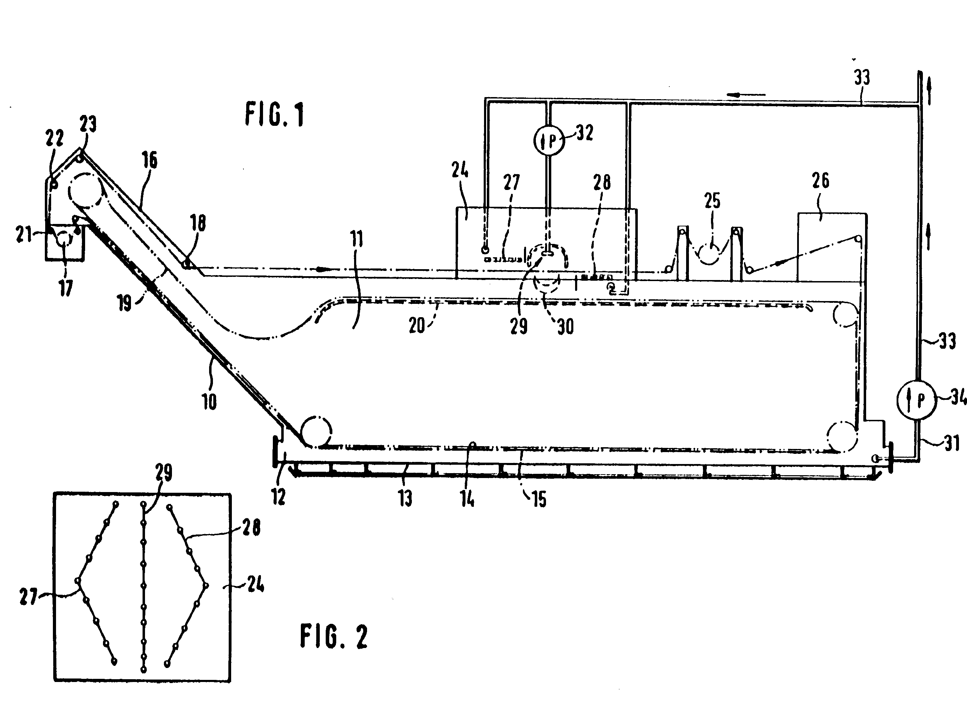

Die Wascheinrichtung 24 ist ein oben und seitlich geschlossenes Gehäuse, in welchem sich im wesentlichen zwei Düsenreihen befinden. Eine erste Düsenreihe 27, welche auch in Figur 2 dargestellt ist, dient zum Aufsprühen von Reinigungsflüssigkeit auf das Filterband, wobei mit dieser Düsenreihe zunächst der auf dem Filterband anhaftende Grobschmutz entfernt wird. Die Düsenreihe erstreckt sich über die gesamte Breite des Filterbandes und bewirkt durch ihre pfeilförmige Ausgestaltung ein Abreinigen des Filterbandes von der Mitte nach außen hin. Es ist weiterhin eine Düsenreihe 28 hinter der Hochdruckdüsenreihe unterhalb des Filterbandes angeordnet und dient zum Abspülen des noch auf der Unterseite des Filterbandes anhaftenden Schmutzes.

Diese beiden Düsenreihen arbeiten mit einem relativ geringen Druck von vorzugsweise 3 bis 5 bar, und werden von der Filtersystempumpe 34 versorgt. Der Druck reicht jedoch nicht aus, um das sehr feinporige Filterband restlos vom Schmutz zu säubern. Insbesondere in den Poren des Filterband haftender Schmutz kann durch diese Vorreinigung nicht entfernt werden.

In der Wascheinrichtung 24 ist deshalb eine weitere Düsenreihe 29 angeordnet. Diese Düsenreihe erstreckt sich, wie in Figur 2 gezeigt, geradlinig über die gesamte Breite des Filterbandes.

Mit dieser Düsenreihe wird eine Hochdruckreinigung des Filterbandes vorgenommen. Der Druck der Reinigungsflüssigkeit beträgt bis zu 100 bar. Durch diesen Hochdruck wird eine zuverlässige Reinigung der Poren des Filterbandes gewährleistet.

Zur Vermeidung von Sprühnebel ist unterhalb des Filterbandes im Bereich der Hochdruckdüsenreihe ein Sprühschutz 30 angeordnet, sodaß außerhalb der Wascheinrichtung kein Sprühnebel entsteht. Als Reinigungsflüssigkeit wird die in der Reinkammer enthaltene Bearbeitungsflüssigkeit benutzt. Diese wird für die Vorreinigung direkt von der vorhandenen Filtersystempumpe entnommen. Die Hochdruckpumpe 32 wird ebenfalls von der Filtersystempumpe 34 gespeist, von dort gelangt die Flüssigkeit über die Leitung 33 zu der Hochdruckdüsenreihe 29.

Sämtliche Düsenreihen sind höhenverstellbar angeordnet, so daß eine Einstellung des optimalen Abstandes von dem Filterband vorgenommen werden kann. Die Reinigungsflüssigkeit läuft in die Schmutzkammer zurück, so daß kein zusätzlicher Auffangbehäler erforderlich ist.

## Patentansprüche

1. Bandfiltereinrichtung zur Reinigung verunreinigter Flüssigkeiten mit einer oberen, die verunreinigte Flüssigkeit aufnehmende Schmutzkammer (11), eine darunter angeordneten mit Unterdruck beaufschlagten und die gereinigte Flüssigkeit aufnehmenden Reinkammer (12) sowie einem dazwischen angeordneten, mit Flüssigkeitsdurchtrittsöffnungen versehenen Filterboden (13), auf dem ein umlaufendes Filterband (14) in Abhängigkeit von der Menge der auf ihm abgelagerten Verunreinigungen automatisch fortbewegbar angeordnet ist, und wobei außerhalb der Schmutzkammer (11) eine Reinigungseinrichtung (17) welche die auf dem Filterband befindlichen Verunreinigung entfernt und eine Wascheinrichtung (24) durch welche das Filterband (14) gesäubert wird vorgesehen ist, wobei sich die Wascheinrichtung (24) im Rücklaufbereich des Filterbandes (14) befindet, dadurch gekennzeichnet,
- daß die Wascheinrichtung (24) unmittelbar oberhalb der Schmutzkammer (11) angeordnet ist und eine Vorreinigungseinrichtung (27, 28) enthält, welche mit Normaldruck die Reinigungsflüssigkeit auf das Filterband (14) aufsprüht zur Beseitigung groben Schmutzes,
- daß die Wascheinrichtung (24) weiterhin ein Hauptreinigungseinrichtung (29) enthält, welche dieser Vorreinigungseinrichtung (27, 28) nachgeordnet ist und welche die Reinigungsflüssigkeit mit Hochdruck auf das Filterband (14) aufsprüht,
- daß sowohl die Vorreinigungseinrichtung (27, 28) als auch die Hauptreinigungseinrichtung (29) von einem gemeinsamen Gehäuse umgeben ist,
- daß unterhalb der Hauptreinigungseinrichtung (29), auf der gegenüberliegenden Seite des Filterbandes, ein Sprühschutz (30) angeordnet ist, welcher die durch das Filterband (14) hindurchtretende Reinigungsflüssigkeit auffängt und der Schmutzkammer (11) zuführt.

2. Bandfiltereinrichtung nach Anspruch 1 dadurch gekennzeichnet, daß die Vorreinigungs- und/oder die Hauptreinigungseinrichtung (27, 28, 29) jeweils wenigstens eine, sich über die Breite des Filterbandes (14) erstreckende Düsenreihe aufweist.

3. Bandfiltereinrichtung nach Anspruch 1 dadurch gekennzeichnet, daß die Vorreinigungs- und/oder die Hauptreinigungseinrichtung (27, 28, 29) jeweils wenigstens eine, sich über das Filterband (14) bewegende Düse aufweist.

4. Bandfiltereinrichtung nach einem der vorherigen Ansprüche dadurch gekennzeichnet, daß die Reinigungsdüsen (27, 28, 29) senkrecht zur Laufrichtung des beweglichen Filterbandes (14) auf dasselbe gerichtet sind.

5. Bandfiltereinrichtung nach einem der vorherigen Ansprüche dadurch gekennzeichnet, daß die Reinigungsdüsen (27, 28, 29) höhenverstellbar angeordnet sind.

6. Bandfiltereinrichtung nach einem der vorherigen Ansprüche dadurch gekennzeichnet, daß der Reinigungseinrichtung eine Spanneinrichtung (25) zum Spannen des Filterbandes nachgeschaltet ist.

7. Bandfiltereinrichtung nach einem der vorherigen Ansprüche dadurch gekennzeichnet, daß die Vorreinigungseinrichtung Reinigungsdüsen (27, 28) oberhalb und unterhalb des Filterbandes (14) aufweist, wobei die Reihe der Reinigungsdüsen pfeilförmig derart angeordnet sind, daß der Pfeil gegen die Laufrichtung des Filterbandes (14) zeigt.

8. Bandfiltereinrichtung nach einem der vorherigen Ansprüche dadurch gekennzeichnet, daß an die Reinkammer (12) eine Rohrleitung (31) angeschlossen ist und diese Rohrleitung (31) zu einer Filtersystempumpe (34) führt, wobei die Filtersystempumpe (34) ausgangsseitig mit einer Rohrleitung (33) verbunden ist, welche an die Düsenreihen (27, 28) angeschlossen ist und daß die Leitung (33) an die Eingangsseite einer Hochdruckpumpe (32) geführt ist, welche ausgangsseitig an die Hochdruckdüsenreihe 29 angeschlossen ist.

9. Bandiltereinrichtung nach einem der vorherigen Ansprüche dadurch gekennzeichnet, daß das Filterband (14) eine Maschenweite von 10 bis 30 µm aufweist.

## Claims

1. Belt-type filter arrangement for purifying contaminated liquids, including an upper unfiltered liquid chamber (11), which accommodates the contaminated liquid, a filtered liquid chamber (12), which is situated beneath said unfiltered liquid chamber, is subject to reduced pressure and accommodates the purified liquid, and a filter base (13), which is disposed between said chambers and is provided with liquid through-apertures, a circulatory filter belt (14) being disposed on said filter base so as to be automatically displaceable in dependence on the quantity of the impurities deposited thereon, and a purifying means (17) being provided externally of the unfiltered liquid chamber (11), which purifying means removes the impurities situated on the filter belt, and a washing means (24) being provided, by means of which the filter belt (14) is cleaned, the washing means (24) being situated in the return region of the filter belt (14), characterised in that
- the washing means (24) is disposed directly above the unfiltered liquid chamber (11) and includes a preliminary purifying means (27, 28), which sprays the liquid to be purified onto the filter belt (14) at normal pressure to remove coarse dirt,
- the washing means (24) additionally includes a main purifying means (29), which is disposed downstream of this preliminary purifying means (27, 28), and which sprays the liquid to be purified onto the filter belt (14) at high pressure,
- both the preliminary purifying means (27, 28) and the main purifying means (29) are surrounded by a common housing,
- a spray guard (30) is disposed beneath the main purifying means (29), on the oppositely situated side of the filter belt, said guard collecting the liquid to be purified, which passes through the filter belt (14), and supplying such liquid to the unfiltered liquid chamber (11).

2. Belt-type filter arrangement according to claim 1, characterised in that the preliminary purifying means and/or the main purifying means (27, 28, 29) each has at least one row of nozzles extending over the width of the filter belt (14).

3. Belt-type filter arrangement according to claim 1, characterised in that the preliminary purifying means and/or the main purifying means (27, 28, 29) each has at least one nozzle moving over the filter belt (14).

4. Belt-type filter arrangement according to one of the preceding claims, characterised in that the purifying nozzles (27, 28, 29) are directed towards the displaceable filter belt (14) perpendicular to the direction of travel of said belt.

5. Belt-type filter arrangement according to one of the preceding claims, characterised in that the purifying nozzles (27, 28, 29) are disposed in a vertically adjustable manner.

6. Belt-type filter arrangement according to one of the preceding claims, characterised in that a tensioning means (25) for tensioning the filter belt is connected downstream of the purifying means.

7. Belt-type filter arrangement according to one of the preceding claims, characterised in that the preliminary purifying means has purifying nozzles (27, 28) above and below the filter belt (14), the row of purifying nozzles being disposed in an arrow-like manner such that the arrow points towards the direction of travel of the filter belt (14).

8. Belt-type filter arrangement according to one of the preceding claims, characterised in that a conduit (31) communicates with the filtered liquid chamber (12), and this conduit (31) extends to a filter system pump (34), the output end of the filter system pump (34) being connected to a conduit (33), which communicates with the rows of nozzles (27, 28), and in that the conduit (33) extends to the input end of a high-pressure pump (32), the output end of said pump communicating with the row of high-pressure nozzles (29).

9. Belt-type filter arrangement according to one of the preceding claims, characterised in that the filter belt (14) has a mesh width of between 10 and 30 µm.

## Revendications

1. Dispositif de filtration à bande pour épurer des liquides souillés comprenant une chambre d'élutriation (11) recevant le liquide souillé, une chambre propre (12) disposée en dessous mise en dépression et recevant le liquide épuré, ainsi qu'un fond de filtre (13) disposé entre et pourvu d'orifices de passage pour le liquide, sur lequel une bande tournante de filtration (14) est disposée de façon à pouvoir avancer automatiquement en fonction de la quantité de souillures déposées sur elle et dans lequel en dehors de la chambre d'élutriation (11) est prévu un dispositif d'épuration (17) qui élimine les souillures se trouvant sur la bande de filtration et un dispositif de lavage (24) au moyen duquel la bande de filtration (14) est nettoyée, le dispositif de lavage (24) se trouvant dans la zone de retour de la bande de filtration (14), dispositif de filtration caractérisé en ce que :
- le dispositif de lavage (24) est disposé directement au-dessus de la chambre d'élutriation (11) et contient un dispositif de pré-nettoyage (27, 28), qui pulvérise sur une pression normale le liquide d'épuration sur la bande de filtration (14) pour éliminer les grosses saletés.
- le dispositif de lavage (24) contient en outre un dispositif de nettoyage principal (29), qui est disposé en aval de ce dispositif de pré-nettoyage (27, 28) et qui pulvérise le liquide de nettoyage à haute pression sur la bande de filtration (14).
- aussi bien le dispositif de pré-nettoyage (27, 28) que le dispositif de nettoyage principal (29) sont entourés d'un carter commun.
- en dessous du dispositif de nettoyage principal (29), sur le côté de la bande de filtration situé en regard est disposé un écran contre les pulvérisations (30) qui capte le liquide de nettoyage passant à travers la bande de filtration (14) et l'envoie à la chambre d'élutriation (11).

2. Dispositif de filtration à bande selon la revendication 1, caractérisé en ce que le dispositif de pré-nettoyage et/ou le dispositif de nettoyage principal (27, 28, 29) présentent respectivement au moins une rangée de buses s'étendant sur la largeur de la bande de filtration (14).

3. Dispositif de filtration à bande selon la revendication 1, caractérisé en ce que le dispositif de pré-nettoyage et/ou le dispositif de nettoyage principal (27, 28, 29) présentent respectivement au moins une buse se déplaçant sur la bande de filtration (14).

4. Dispositif de filtration à bande selon l'une des revendications précédentes, caractérisé en ce que les buses de nettoyage (27, 28, 29) sont disposées perpendiculairement au sens de déroulement de la bande mobile de filtration (14) sur celle-ci.

5. Dispositif de filtration à bande selon l'une des revendication précédentes, caractérisé en ce que les buses de nettoyage (27, 28, 29) sont disposées de façon à pouvoir être réglées en hauteur.

6. Dispositif de filtration à bande selon l'une des revendications précédentes, caractérisé en ce qu'un dispositif de fixation (25) est monté en aval du dispositif de nettoyage pour fixer la bande de filtration.

7. Dispositif de filtration à bande selon l'une des revendications précédentes, caractérisé en ce que le dispositif de pré-nettoyage présente des buses de nettoyage (27, 28) au-dessus et au-dessous de la bande de filtration (14), la rangée des buses de nettoyage étant disposée en forme de flèche, de telle sorte que la flèche soit tournée en sens inverse du sens de déroulement de la bande de filtration (14).

8. Dispositif de filtration à bande selon l'une des revendications précédentes, caractérisé en ce que sur la chambre propre (12) est raccordée une conduite tubulaire (31) et cette conduite tubulaire mène à une pompe du système de filtration (34), la pompe du système de filtration (34) étant reliée du côté de la sortie à une conduite tubulaire (33), qui est raccordée aux rangées de buses (27, 28) et en ce que la conduite (33) est amenée au côté entrée d'une pompe haute pression (32), qui est raccordée du côté sortie à la rangée des buses haute pression (29).

9. Dispositif de filtration à bande selon l'une des revendications précédentes, caractérisé en ce que la bande de filtration (14) présente une ouverture de maille de 10 à 30 x 10⁻⁶ m.
